# EUROPÄISCHE PATENTANMELDUNG

(11) **EP 4 840 795 A1**
(43) Veröffentlichungstag der Anmeldung: **18.11.2026**
(21) Anmeldenummer: 25177004.6
(22) Anmeldetag: 16.05.2025
(51) Int. Cl.: B65G 1/02, A47B 96/02

(54) **DURCHSCHUBSICHERUNG UND REGAL MIT DIESER DURCHSCHUBSICHERUNG**

(71) Anmelder: voestalpine Krems Finaltechnik GmbH, 3502 Krems-Lerchenfeld (AT)
(72) Erfinder: Rester, Alexander, 3495 Rohrendorf bei Krems (AT); Schranz, Michael, 3500 Krems an der Donau (AT); Glassner, Christoph, 3620 Spitz an der Donau (AT)
(74) Vertreter: Jell, Friedrich

(57) **Zusammenfassung**

Es wird ein Regal (1) und eine Durchschubsicherung (7), insbesondere in Form eines Blechprofils, für das Regal (1) für Stückgut (2a, 2b, 2c) gezeigt. Die Durchschubsicherung (7) kann besonders hohe Aufpralllasten plastisch aufnehmen, da zwischen dem Steg (8) und dem zweiten Schenkel (10) ein erster spitzer Innenwinkel (12), insbesondere im Bereich von 50 bis 70 Grad, beispielsweise von 60 Grad, besteht.

## Beschreibung

Die Erfindung betrifft ein Regal und eine Durchschubsicherung, insbesondere in Form eines Blechprofils, für ein Regal für Stückgut, insbesondere Paletten, mit einem gerade verlaufenden Steg und mit zumindest zwei gegensinnig vom Steg, insbesondere an den Stegenden, abstehenden Schenkeln, von denen ein erster Schenkel zur Montage am Regal, insbesondere an einem Längsträger des Regals, und ein anderer, zweiter Schenkel zur plastischen Verformung durch anschlagendes Stückgut ausgebildet sind.

Aus dem Stand der Technik sind Durchschubsicherungen in Form von winkelförmigen Blechprofilen bekannt, die ein unbeabsichtigtes Durchschieben des Stückguts über die Regaltiefe hinaus verhindern und zur Erhöhung der Betriebssicherheit des Regals beitragen. Zudem sollen Durchschubsicherungen im Kollisionsfall auch Schäden am Regal vermeiden. Typischerweise bestehen diese Durchschubsicherungen aus einem Steg und zwei rechtwinklig dazu angeordneten Schenkeln. Einer dieser Schenkel ist zur festen Befestigung am Regal ausgebildet, während der andere der plastischen Verformung durch anschlagendes Stückgut dient. Ein wesentlicher Nachteil dieser bekannten Ausführungen besteht jedoch darin, dass bereits geringfügige plastische Verformungen zu einer rampenartigen Geometrie führen können. Dies führt zu einem verformungsbedingten Funktionsverlust, bei dem die Rückhaltewirkung der Durchschubsicherung nicht mehr gewährleistet ist und die Betriebssicherheit des Regals beeinträchtigt wird.

Die Erfindung hat sich daher die Aufgabe gestellt, eine aus dem Stand der Technik bekannte Durchschubsicherung in ihrer Rückhaltewirkung und damit die Betriebssicherheit des Regals zu verbessern.

Die Erfindung löst die gestellte Aufgabe durch die Merkmale des Anspruchs 1.

Indem zwischen dem Steg und dem zweiten Schenkel ein erster spitzer Innenwinkel besteht, kann die Durchschubsicherung auch nach plastischer Verformung ihre Wirksamkeit behalten. Dieser Winkel verhindert nämlich zuverlässig die Bildung einer rampenartigen Geometrie, welche zu einem Funktionsverlust führen kann. Stattdessen ermöglicht er eine kontrollierte plastische rampenartigen zur Absorption von kinetischer Energie. Die Rückhaltewirkung bleibt dabei erhalten, was die Betriebssicherheit des Regals erhöht und/oder Schäden am Regal verhindert.

Dies insbesondere, wenn der Innenwinkel im Bereich von 50 bis 70 Grad, beispielsweise 60 Grad, beträgt, kann ein Optimum zwischen zwei funktional gegensätzlichen Anforderungen erreicht werden. So kann dieses Maß einerseits einen sicheren Anschlag für das Stückgut gewährleisten und andererseits einen ausreichend großen Biegewinkel des zweiten Schenkels zur Energieaufnahme bereitstellen. Die erfindungsgemäße Durchschubsicherung ist damit im Vergleich zum Stand der Technik in der Rückhaltewirkung deutlich verbessert und erhöht somit die Betriebssicherheit des Regals erheblich.

Vorzugweise weist der zweite Schenkel mehrere, insbesondere zwei, Schenkelabschnitte auf, von denen ein erster Schenkelabschnitt an den Steg anschließt und ein zweiter Schenkelabschnitt dem Steg zulaufend verlaufend ausgebildet ist. Diese unterschiedlich abgewinkelten Schenkelabschnitte können die Energieaufnahme der Durchschubsicherung weiter erhöhen. Beispielsweise kann damit zunächst der erste Schenkelabschnitt kinetische Energie aufnehmen und nachfolgend der zweite Schenkelabschnitt durch dessen Verformung diese kinetische Energie weiter dissipieren. Damit kann die Durchschubsicherung kleine als auch hohe Mengen an Anprallenergie aufnehmen, was sie besonders sensibel gegenüber geringen Einlagerungsfehlern macht und damit das Regal standfest in jeder Situation schützen kann.

Vorzugsweise schließt der zweite Schenkelabschnitt an den ersten Schenkelabschnitt an, was die Konstruktion der Durchschubsicherung weiter vereinfachen kann.

Vorstellbar ist, dass zwischen dem ersten und zweiten Schenkelabschnitt ein zweiter stumpfer Innenwinkel besteht. Damit verformt sich der zweite Schenkelabschnitt standfest nach dem Beginn der Verformung des ersten Schenkelabschnitts, was die Wirksamkeit der Durchschubsicherung weiter erhöht

Dafür kann der zweite stumpfe Innenwinkel beispielsweise im Bereich von größer 90 bis 135 Grad liegen, insbesondere 105 Grad betragen, um eine optimalere Verformung und Energieaufnahme zu gewährleisten.

Beispielsweise verläuft der Steg, der erste Schenkel und/oder der zweite Schenkel zumindest abschnittsweise gerade verlaufen. Vorstellbar ist, dass der Steg, der erste Schenkel und/oder der zweite Schenkel im Wesentlichen gerade verlaufen.

Die Konstruktion der Durchschubsicherung kann weiter vereinfacht werden, wenn der erste Schenkel an den Steg rechtwinkelig anschließt.

Die Durchschubsicherung kann in der Konstruktion weiter vereinfacht werden, wenn Steg und Schenkel von einem Blechprofil ausgebildet werden. Vorteilhafterweise kann es sich hier um ein gebogenes Blechprofil handeln, beispielsweise hergestellt durch Umformen, wie beispielsweise Walzprofilieren. Das Blechprofil kann beispielsweise einen Stahlwerkstoff aufweisen oder daraus bestehen.

Die erfindungsgemäße Durchschubsicherung kann sich insbesondere für ein Regal eignen. Beispielsweise, wenn die Durchschubsicherung rückseitig des Regals vorgesehen ist.

Vorzugsweise kann das Regal für Stückgut, insbesondere Paletten, mehrere Vertikalsteher und mehrere zwischen den Vertikalstehern verlaufenden und an diesen lastenden Längsträger zur Auflastung mit Stückgut aufweisen. Das Stückgut kann indirekt oder direkt auf diesen Längsträgern auflasten.

Vorzugsweise ist die Durchschubsicherung mit dem ersten Schenkel am Längsträger befestigt - beispielsweise am rückseitig des Regals angeordneten Längsträger.

Vorzugweise ist der erste Schenkel auf der, der Rückseite des Regals abgewandten Seite des Längsträgers befestigt, was die Montage und Demontage der Durchschubsicherung von der Frontseite des Regals aus erheblich erleichtern kann.

Der Befestigungsabschnitt der Durchschubsicherung kann beispielsweise entlastet werden, wenn der Steg eine Auflagefläche für die Stückgutauflage des Regals ausbildet.

Hierzu kann weiter vorteilhaft sein, wenn der Steg über und auf dem Längsträger verläuft, um damit über die Auflast des Stückguts verformungsbedingte Zugkräfte im Steg auf den Längsträger abzutragen und so den Befestigungsabschnitt zu entlasten. Vorteilhaft kann beispielsweise weiter sein, wenn es sich hier um den rückseitig des Regals angeordneten Längsträger handelt.

Beispielsweise erstreckt sich die Durchschubsicherung von einem Vertikalsteher zum gegenüberliegenden anderen Vertikalsteher, und zwar zumindest über die Hälfte der Breite zwischen diesen Vertikalstehern, um damit eine vergleichsweise hohe Energieaufnahme zu ermöglichen.

In den Figuren ist beispielsweise der Erfindungsgegenstand anhand eines Ausführungsbeispiels näher dargestellt. Es zeigen
- Fig. 1: eine Draufsicht auf ein Regal für Stückgut und
- Fig. 2: eine vergrößerte Seitenansicht auf eine Durchschubsicherung des nach Fig. 1 dargestellten Regals.

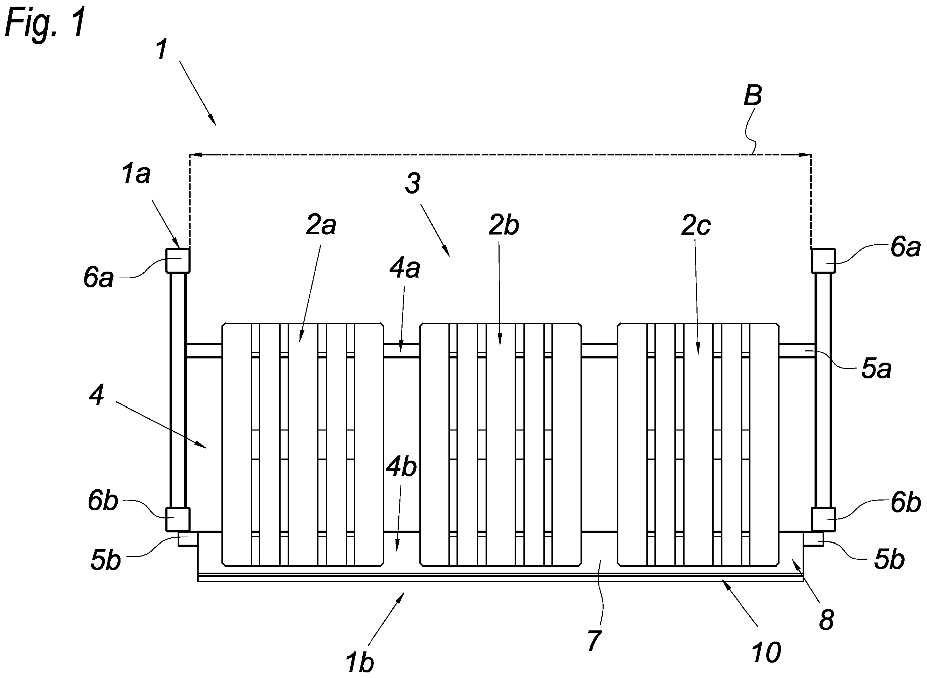

Nach Fig. 1 ist beispielsweise ein als Längstraversenregal ausgeführtes Regal 1 dargestellt, das Stückgut 2a, 2b, 2c, nämlich wie dargestellt eine Palette, aufnehmen kann. Hierzu weist das Regal 1 mehrere offene Regalfächer 3 auf, die nebeneinander angeordnet und gleich ausgestaltet sind. Aus Gründen der einfachen Lesbarkeit wird lediglich ein Regalfach 3 der dargestellten Regalfächer weiter beschrieben.

Das Regalfach 3 ist zur Vorderseite 1a des Regals 1 entlang einer nicht dargestellten Lagergasse offen, um Stückgut 2a, 2b, 2c ein- und auslagern zu können. Das Regalfach 3 nimmt im dargestellten Fall drei Stückgüter 2a, 2b, 2c nebeneinander gelagert auf - wodurch das Regalfach 3 also zur Mehrplatzlagerung von Stückgut 2a, 2b, 2c ausgebildet ist. Jegliche Größe des Regals 1 ist denkbar - unter anderem, aber nicht dargestellt, das Stückgut 2a, 2b, 2c hintereinander im Regalfach 3 zu lagern.

Das Regalfach 3 weist zur Lagerung der Stückgüter 2a, 2b, 2c eine Stückgutauflage 4 zur Auflastung mit Stückgut 2a, 2b, 2c auf. Diese Stückgutauflage 4 wird von zwei horizontal verlaufenden, zueinander parallel auf Abstand versetzt angeordneten Längsträgern 5a und 5b abgestützt. Diese Längsträger 5a, 5b sind an den vorderen und hinteren Vertikalstehern 6a, 6b des Regals 1 befestigt. Der vorderseitige Längsträger 5a bildet eine Auflagefläche 4a der Stückgutauflage 4 aus.

Auf der Rückseite 1b des Regals 1 ist für das Regalfach 3 eine Durchschubsicherung 7 als Anschlagelement vorgesehen, mit deren Hilfe Einlagerungsfehler, beispielsweise ein zu tiefes Einlagern der Stückgüter 2a, 2b, 2c, verhindert werden können. So weist die als Blechprofil ausgebildete Durchschubsicherung 7 einen gerade verlaufenden Steg 8 und mit zumindest zwei gegensinnig und an den Stegenden abstehenden Schenkel 9, 10 auf. Hierbei kann es sich beispielsweise um ein rollprofiliertes Blechprofil aus Stahl handeln.

Von diesen Schenkeln 9, 10 weist der erste Schenkel 9 ein Schraubenloch 9b zur Befestigung am rückseitigen Längsträger 5b über eine Schraubverbindung 11 auf. Diese Schraubverbindung 11 wird von einer Kopfschraube 11a und einer mit der Kopfschraube 11a zusammenwirkenden Schraubenmutter 11b ausgebildet.

Ein zweiter Schenkel 10 dieser Schenkel 9, 10 dient als Anschlag für das Stückgut 2a, 2b, 2c und zur Energieaufnahme durch dessen plastische Verformung im Anschlagsfall, um Einlagerungsfehler zu verhindern und so auch das Regal 1 gegenüber Beschädigungen zu schützen.

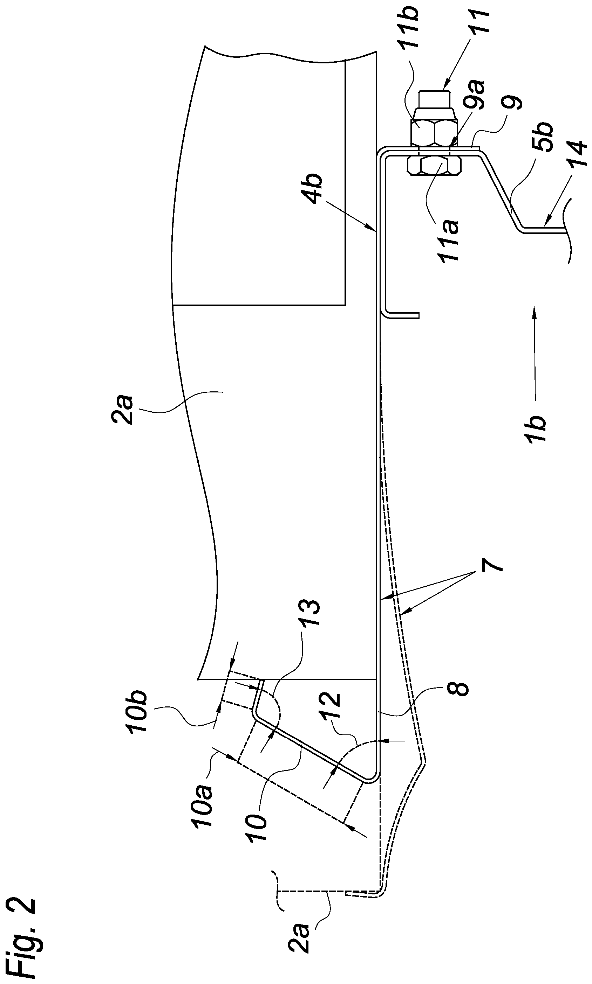

Diese Energieaufnahme ist erfindungsgemäß durch eine besondere Ausgestaltung des zweiten Schenkels 10 erheblich verbessert. Zwischen dem Steg 8 und dem zweiten Schenkel 10 besteht nämlich ein erster spitzer Innenwinkel 12 von 60 Grad, wie im Ausführungsbeispiel dargestellt. Mit diesem Winkelmaß kann die Durchschubsicherung 7 einen sicheren Anschlag für das Stückgut 2a sowie einen ausreichend großen Biegewinkel zur plastischen Verformung und damit Energieaufnahme aufweisen, das in Fig. 2 strichliert eingezeichnet erkannt werden kann. Damit ist die Durchschubsicherung 7 in der Rückhaltewirkung verbessert, was zu einer hohen Betriebssicherheit des Regals 1 führt.

Dies wird insbesondere dadurch verbessert, indem der zweite Schenkel 10 zwei unterschiedlich geneigt verlaufende Schenkelabschnitte 10a, 10b aufweist. Der erste Schenkelabschnitt schließt an den Steg 8 mit dem ersten Innenwinkel 12 an und der zweite Schenkelabschnitt 10b schließt an den ersten Schenkelabschnitt 10a an. Hierbei ist der zweite Schenkelabschnitt 10b dem Steg 8 zulaufend verlaufend ausgebildet, wie in Fig. 2 zu erkennen.

Hierzu besteht zwischen dem ersten und zweiten Schenkelabschnitt 10a, 10b ein zweiter stumpfer Innenwinkel 13 von 105 Grad, wie im Ausführungsbeispiel nach Fig. 2 dargestellt. Damit kann eine zeitlich in der Höhe verzögerte plastische Energieaufnahme ermöglicht werden. Im Aufprallfall wird sich der erste Schenkelabschnitt 10a beginnend verformen und dann der zweite Schenkelabschnitt 10b folgend, was eine mehrstufige plastische Energieaufnahme ermöglicht. Damit kann die Durchschubsicherung 7 gegenüber Einlagerungsfehlern sensibel durch Energieaufnahme des ersten Schenkelabschnitts 10a und standfest durch Energieaufnahme von beiden Schenkelabschnitten 10a, 10b wirken. Das Regal 1 ist daher besonders gut gegenüber verschiedensten Einlagerungsfehlern geschützt.

Zudem kann der Fig. 2 entnommen werden, dass Steg 8 und die zwei Schenkel 9, 10 und damit auch die Schenkelabschnitte 10a, 10b des zweiten Schenkels 10 gerade verlaufen. Der erste Schenkel 9 schließt rechtwinkelig an den Steg 8 an, was die Montage der Durchschubsicherung 7 erleichtert.

Zudem dient die Durchschubsicherung 7 auch der Stückgutauflage 4 des Regals 1, und zwar bildet der Steg 8 der Durchschubsicherung 7 eine Auflagefläche 4b der Stückgutauflage 4 aus. Hierzu verläuft der Steg 8 über und auf dem rückseitigen Längsträger 5b. Zudem ist der erste Schenkel 9 auf der Rückseite 1b des Regals 1 abgewandten Seite 14 des rückseitigen Längsträgers 5b befestigt. Damit lastet das Stückgut 2a über den Steg 8 auf dem Längsträger 5b, was im Anprallfall die Kraft auf den ersten Schenkel 9 und damit die Schraubverbindung 11 zwischen Durchschubsicherung 7 und rückseitigen Längsträger 5b reduzieren kann. Dies erhöht die Standfestigkeit der Durchschubsicherung 7.

Zudem kann eine erhöhte Anprallenergie von der Durchschubsicherung 7 aufgenommen werden, da diese, wie in der Fig. 1 zu entnehmen, sich die Durchschubsicherung 7 von einem Vertikalsteher 6a zum gegenüberliegenden anderen Vertikalsteher 6a erstreckt, und zwar zumindest über die Hälfte der Breite B zwischen diesen Vertikalstehern 6b, 6b. Dies ist daran zu erkennen, dass sich die Durchschubsicherung 7 im Wesentlichen über die gesamte Bereite B erstreckt.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably", und für "gegebenenfalls", ins Englische übersetzt als "if necessary".

## Patentansprüche

1. Durchschubsicherung, insbesondere in Form eines Blechprofils, für ein Regal (1) für Stückgut (2a, 2b, 2c), insbesondere Paletten, mit einem gerade verlaufenden Steg (8) und mit zumindest zwei gegensinnig vom Steg (8), insbesondere an den Stegenden, abstehenden Schenkeln (9, 10), von denen ein erster Schenkel (9) zur Montage am Regal (1), insbesondere an einem Längsträger (5b) des Regals (1), und ein anderer, zweiter Schenkel (10) zur plastischen Verformung durch anschlagendes Stückgut (2a, 2b, 2c) ausgebildet sind, **dadurch gekennzeichnet, dass** zwischen dem Steg (8) und dem zweiten Schenkel (10) ein erster spitzer Innenwinkel (12), insbesondere im Bereich von 50 bis 70 Grad, beispielsweise von 60 Grad, besteht.

2. Durchschubsicherung nach Anspruch 1, **dadurch gekennzeichnet, dass** der zweite Schenkel (10) mehrere, insbesondere zwei, Schenkelabschnitte (10a, 10b) aufweist, von denen ein erster Schenkelabschnitt (10a) an den Steg (8) anschließt und ein zweiter Schenkelabschnitt (10b) dem Steg (8) zulaufend verlaufend ausgebildet ist.

3. Durchschubsicherung nach Anspruch 2, **dadurch gekennzeichnet, dass** der zweite Schenkelabschnitt (10b) an den ersten Schenkelabschnitt (10a) anschließt und dass zwischen dem ersten und zweiten Schenkelabschnitt (10a, 10b) ein zweiter stumpfer Innenwinkel (13), im Bereich von größer 90 bis 135 Grad, insbesondere von 105 Grad, besteht.

4. Durchschubsicherung nach einem der Ansprüche 1 bis 3, **dadurch gekennzeichnet, dass** der Steg (8), der erste Schenkel (9) und/oder der zweite Schenkel (10) zumindest abschnittsweise gerade verlaufen und/oder dass der erste Schenkel (9) an den Steg (8) rechtwinkelig anschließt.

5. Durchschubsicherung nach einem der Ansprüche 1 bis 4, **dadurch gekennzeichnet, dass** Steg (8) und Schenkel (9, 10) von einem, insbesondere gebogenen, Blechprofil ausgebildet werden.

6. Regal für Stückgut, insbesondere Paletten, mit einer, insbesondere rückseitig des Regals (1) vorgesehenen, Durchschubsicherung nach einem der Ansprüche 1 bis 5.

7. Regal nach Anspruch 6, **dadurch gekennzeichnet, dass** das Regal (1) mehrere Vertikalsteher (6a, 6b) und mehrere zwischen den Vertikalstehern (6a, 6b) verlaufenden und an diesen lastenden Längsträger (5a, 5b) zur Auflastung mit Stückgut (2a, 2b, 2c) aufweist.

8. Regal nach Anspruch 7, **dadurch gekennzeichnet, dass** die Durchschubsicherung (7) mit dem ersten Schenkel (9) am, insbesondere rückseitig des Regals (1) angeordneten, Längsträger (5b) befestigt ist.

9. Regal nach Anspruch 8, **dadurch gekennzeichnet, dass** der erste Schenkel (9) auf der, der Rückseite (1b) des Regals (1) abgewandten Seite (14) des Längsträgers (5b) befestigt ist.

10. Regal nach einem der Ansprüche 6 bis 9, **dadurch gekennzeichnet, dass** der Steg (8) eine Auflagefläche (4b) für die Stückgutauflage (4) des Regals (1) ausbildet und/oder dass der Steg (8) über und auf dem, insbesondere rückseitig des Regals (1) angeordneten, Längsträger (5b) verläuft.

11. Regal nach einem der Ansprüche 6 bis 10, **dadurch gekennzeichnet, dass** sich die Durchschubsicherung (7) von einem Vertikalsteher (6a) zum gegenüberliegenden anderen Vertikalsteher (6a) erstreckt, und zwar zumindest über die Hälfte der Breite (B) zwischen diesen Vertikalstehern (6a, 6b).
